# EUROPEAN PATENT APPLICATION

(11) **EP 0 734 021 A2**
(43) Date of publication of application: **25.09.1996**
(21) Application number: 96104308.0
(22) Date of filing: 19.03.1996
(51) Int. Cl.: G11B 20/10

(54) **Method and apparatus for decoding of digital audio data coded in layer 1 or 2 of MPEG format**

(30) Priority: 23.03.1995 DE 19510226; 28.04.1995 DE 19515612
(71) Applicant: SICAN, GESELLSCHAFT FÜR SILIZIUM-ANWENDUNGEN UND CAD/CAT NIEDERSACHSEN mbH, D-30419 Hannover (DE)
(72) Inventor: Gao, Fei, 30167 Hannover (DE); Oberthür, Thomas, 30880 Laatzen (DE); Tilmann, Mathias, 30419 Hannover (DE)

(57) **Abstract**

The invention relates to a method and an apparatus for decoding of digital audio data coded in layer 1 or 2 of MPEG format. Processing of the inverse quantization of the quantizised samples and processing of the rescaling of the inverse quantizised samples is taking place contemporaneous to the windowing of the data transformed into the range of time and not contemporaneous thereto the transformation of the data from the range of frequency into the range of time using a matrix operation is taking place. The apparatus having two fixed wired control units 2 and 3, said first control unit (2) used for frame synchronization of a data stream, header decoding, reading of page informations, inverse quantization of quantizised subband samples and rescaling of said inverse quantizised samples and said second control unit (3) used for transformation of said rescaled sample data from the range of frequency into the range of time using a matrix operation and for windowing of the data transformed into the range of time.

## Description

In the ISO/IEC 11172 standard data reduction processes are defined both for video and for audio data. Said standard is titled "Information technologie - coding of moving pictures and associated audio for digital storage media at up to 1,5 Mbit/s". In this standard various algorithms for the compression of video and audio data are defined and a concept for the synchronisation of video and audio within a data stream is proposed.

In part 3 "Audio" three different layers are defined using algorithms for data compression having different complexity. According to their complexity the algorithms are designated as layer 1, layer 2 and layer 3. A layer x-Dekoder has to be situated decoding both layer x as well as every layer x-n (N < x, with x=1,2 or 3). Only the format of the comprimized data stream is described by the standard, so that only the decoder is specified. On the other hand the design of the encoder isn't defined, so that improvements of the encoder in quality are impossible without changings of the decoder.

Layer 1 and 2 algorithms are basing on a common principle of said encoder. For data compression boths methods the reduction of redundance as well as the reduction of irrelevance are used, thus in general the decoded signal can not completely be reconstructed.

The coding steps of layer 1 and 2 are as described in the following:
1) Using a polyphase filter bank the signal is transformed from the range of time in the range of frequency. The resolution amounts to 1/32 of the band width of the original signal. This way 32 part bands arising having a constant width depending on the sampling frequency. Samples of each of a part band are summarized to groups of 12 sample datas and are commonly processed. A scale factor is defined for each group using the maximum value of the 12 sample datas and the whole data are scaled using a scale factor. An increased dynamics is facilitated by said method of block companding using an increased modulation of the following quantiziser having an equal number of quantiziser steps.
2) Parallel to the polyphase filter bank the audio signal is analyzed using a psycho acoustical model. Thereby it is determined, which parts of the signal can't be perceived with human ears, because of covering effects being irrelevant for the impression of hearing therefore. For each part band a masking threshold is calculated out of this information. To remain the disturbances of quantizising below the masking threshold and being inaudible for this, the number of the quantiziser steps is defined by the distance between a maximum signal level inbetween a part band and the masking threshold.
3) The scaled samples are quantizised with the help of said quantiziser using control informations of said psycho acoustical model.
4) At the end assembling of a frame of an audio data stream is taken place consisting of a header, a page informations required by the decoder and quantizised subband samples.

A framework of a data stream comprimized according to the method of a MPEG audio layer x (x<3) is consisting of a synchronization word (Sync), a header, an optional CRC test sum, page information, quantizised subband samples and optional additional informations. In said page informations the bit allocation table and the informations about scale factors are contained.

In layer 1 the bit allocation table is ascertained by the psycho acoustic model. There the number of bits is stated used for quantizising of each part band to be quantizised. Each value of the bit allocation table has a width of four bits, thus the accuracy of quantizising ranges between 0 and 15 bit. A bit allocation of 0 bit means, that no information will be transmitted for the corresponding part band.

In layer 1 the page information is consisting of a completely bit allocation table as well as of scale factors for each group. However the scale factors are transmitted only for those bands bits are allocated.

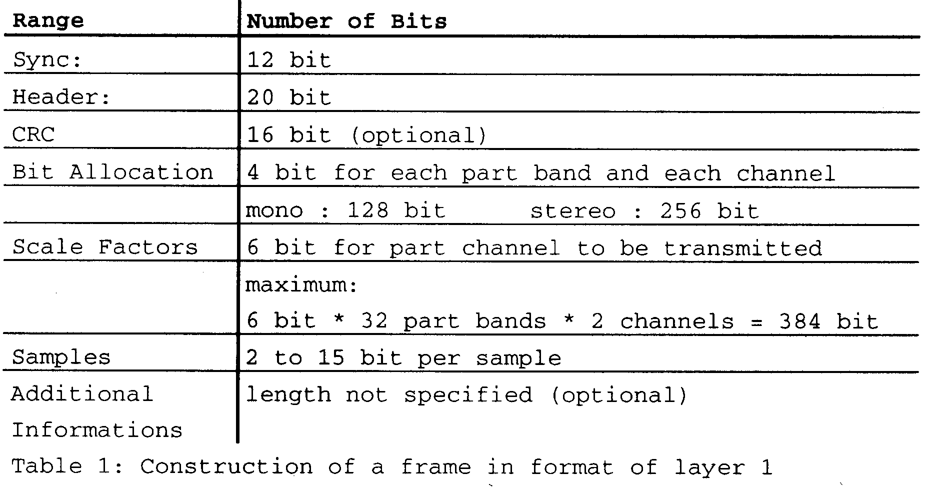

Layer 2 in essential distinguishes from layer 1 by an increased frame length and a more efficient coding of the page information and by this it reaches an increased quality having a higher rate of compression. The bit allocation table in layer 2 isn't completely build up for the whole 32 part bands, but is limited on a determined number of subbands depending on bit rate and mode. Additionally the values stored in the bit allocation tables doesn't directly indicate the quantization width, but they are an index to one of the four bit allocation tables in which these number is stored. Coding the indices 2, 3 or 4 bits are used for different frequency ranges.

At layer 2 a number of 1152 (= 3 * 384) PCM data are processed within a frame. From these data 36 data for each part band are resulting after filtering having said data divided into three groups of 12 values. For each group a scale factor is defined. Because in stationary signals said three scale factors of a subband doesn't differ or differ only negligible from another respectively saving data transfer rate for the scale factors can be succeeded transmitting only once equal scale factors of a part band. The information about which scale factors of a subband are contained into the data stream is stated in the select informations of the scale factor (SCFSI). Therefore four different patterns of the scale factors are coded using 2 bit and stated for each used part band.

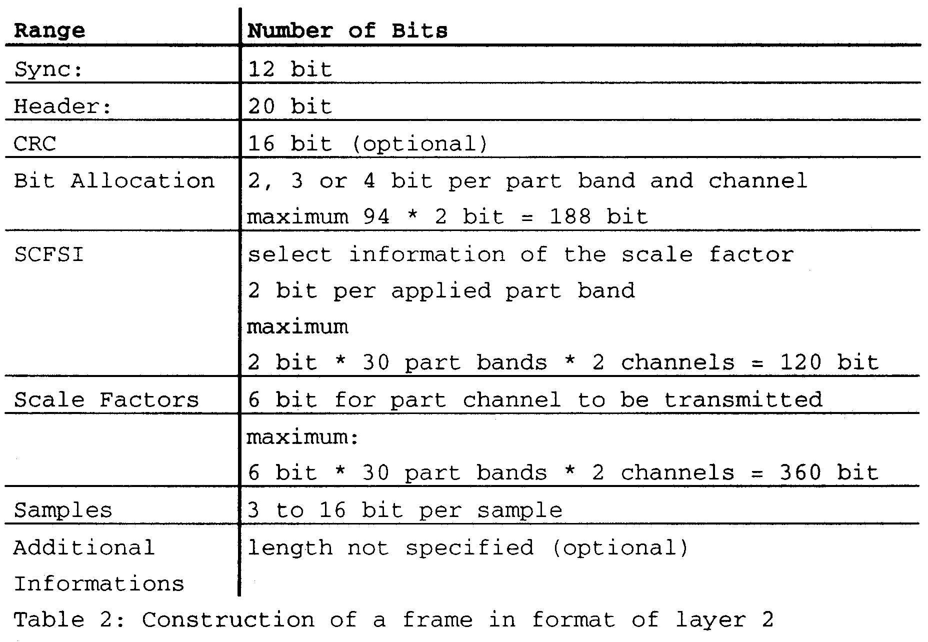

The algorithms and procedures for decoding are defined in the ISO/IEC 11172-3:1993 standard "Information technology - Coding of moving pictures and associated audio for digital storage media at up to about 1,56 Mbit/s - Part 3: Audio" in great detailes. With it the basic structure of a decoder is also defined.

The decoding procedure comprises three functional units:
- Synchronisation of the frames and decoding of the page information (Frame-Unpacking)
- Inverse quantization and reskaling (Reconstruction)
- Transformation in the range of time and windowing (Inverse Mapping)

The decoder first is synchronizing itself to the block structure of the bit stream and is disassembling again said stream into additional informations and quantizised spectral data. These are the basics for a subsequent reconstruction of the spectrum. Finally an inverse filter bank is transmitting the spectral datas in the range of time again.

However the method of processing is very expensive, especially because of the described filter algorithm. The processes for the basic functions can't be processed as parallel as possible without further expenditure on processing units.

Using the chip MASC 3500 of Intermetall an audio decoder can be build up for layer 1 to 3. It's function is described in "Single Chip Implementation of an ISO/MPEG Layer III Decoder", in AES, 26.2.-1.3.1994, Amsterdam. It deals with a programmable DSP comprising an arithmetic unit, two parallel memory blocks having corresponding address generators and a control unit. The capacity-use of the arithmetical unit will be optimized using a so-called "Harvard architecture", whereas data of commands and audio data are transmitted at separated data paths. The arithmetic unit comprises a multiplier/ accumulator (MAC) and an arithmetic logic unit (ALU). The decoder offers the advantage being flexibly usable because of it's free programmability. However, the high input power is derogatory compared to user oriented circuits and a high chip area is necessary, so that together with further functional units, such as a video decoder, a common integration of the circuit isn't possible. Also the circuit offers no possibility having parallel processes increasing the throughput rate and minimizing the clock frequency respectively getting a decreased input power.

The same disadvantage is also shown by the decoder CS4920 described in the data handbook "Multi Standard Audio Decoder DAC" of CRYSTAL Semiconductor Corporation. It is also based upon a digital signal processor (DSP).

A decoder unit L 64111 for layer 1 and 2 of LSI-Logic comprises four components: preparser, decoder, DRAM-Controler and PCM interface. It requires external DRAM. The manner of operation is described in ELRAD, volume 1, 1994, page 66. The preparser is sorting the whole data of the audio part out of the MPEG system stream, synchronizing system and audio data stream and is removing the parametrical header and the informations of times. The decoder is unpacking the audio data and is processing inverse quantization, scaling and filtering. The decoding process is starting with a start command produced by the microprocessor or transmitted via an external start input. The decoder is reading the parameter and the information out of the external DRAM, whereas the DRAM-controler is coordinating the process of writing of the parser and the process of reading of the decoder. The processes of inverse quantization, scaling, transformation into the range of time, as well as windowing are running serial one after another controlled by a programm. A multiplier accumulator unit is integrated into the decoder logic processing the calculations necessary.

Disadvantagely this audio decoder can not proceed processes for decoding parallel, so that resources are not used in an optimum way. Moreover for controlling the processes an external microcontroler is necessary. Further, usually data are stored relative to their group into the process using a linear, logical address. But the memory access to the audio data differs according to the various processes, so that memory areas can't be overwritten. For this, a shared memory can't utilized an optimized way especially with hard wired untis for data processing.

### SUMMARY OF THE INVENTION

Object of the invention is providing a method and an apparatus for decoding of digital audio data coded in the layer 1 or 2 of the MPEG format. The method and the apparatus should be designed such a way, than it can be integrated requiring a chip area as low as possible. Facilitating a combination of the apparatus with further functions, such as video decoder, the apparatus should have an input power as low as possible minimizing the necessary clock rate. From there the solution should not be based on a digital signal processor (DSP). Rather the resources should be used by the invention in an optimum way. For this, the expenditure of processing units should be minimized and the memory should be utilized in an optimized way.

The object is solved by the invention according to the method as claimed in claim 1 and to the apparatus as claimed in claim 6.

An essential advantage of the invention is the optimized capacity-use of the multiplier. The common use of the processing unit is facilitated by dividing the processes up to different control units and processing them in time multiplex. The processes can be yet started parallel, because they cooperative regulate the access to the multiplier thus dissolving access conflicts. Thereby inverse quantization, rescaling and windowing can be started parallel, when the processes of transformation of said rescaled sample data using a matrix calculation, decoding of said header and synchronization of frames are completed.

Providing the first and second control units with respective local memory, single processes advantageous can be processed parallel from each other. Usefully the local memory should be a part memory designed for fixed values for standardized coefficients. But both, the first and second control units are able to commonly reading and writing the shared memory, so that said second control unit is placed at the rescaled audio's disposal. Because in the following matrix calculation the multiplier is fully working to capacity anyway, no parallel rescaling is processed. There is no need for the first control unit accessing to the shared memory in this period, so that no conflict arises. By this processing of the processes independently from each other using said first and second control units, there is the advantage, that having simple start signals of a system control unit carrying out the processes can be coordinated in a time optimized way without having a high expenditure on control elements.

A further optimization of the decoder can be achieved by reduction of the required operations for the process of filtering. For this the standardized algorithm of the filter is transformed. By this the processing efford necessary decreases by a half.

A very advantageous design of the decoder can be achieved by the individual processes accessing to a linear logical address room being transformed to a physical address inbetween the common memory. For this a plurality of address map modes are defined releasing memory areas depending on the processes carried out and carrying out the memory allocation. Data which are no more used, can be overwritten nearly suddenly, so that the memory is used at an optimum. The control of said address map mode is taken place through the system control unit.

By realization the apparatus having the essential features of the invention only a small chip area is necessary in contrary to solutions having programmable digital signal processors. The continuous capacity-use of the processing unit leads to a very low clock rate necessary and by this to a very low input power of the apparatus. This way it is possible, e.g. in connection with a circuit for decoding of video signals, integrating a complete solution onto one circuit board.

### BRIEF DESCRIPTION OF THE DRAWINGS

Using the following drawings the invention will be described. It shows:
- Fig. 1:: A block diagram of an audio decoder having two control units 1 and 2 and a common processing unit;
- Fig. 2:: Time connecting of the processes of layer 1;
- Fig. 3:: Time connecting of the processes of layer 2;
- Fig. 4:: First part of a flow chart of the process control by a control unit 5;
- Fig. 5:: Second part of the flow chart, shown in figure 4;
- Fig. 6:: Flow chart of the process control for decoding page informations using the first control unit 2;
- Fig. 7:: Flow chart of the control elements "Wait for Sync-word" used for decoding the page information using the first control unit 2;
- Fig. 8:: Flow chart for decoding the header using the first control unit 2;
- Fig. 9:: Flow chart for selecting localization of the audio data in the data stream;
- Fig. 10:: Flow chart for selecting the SCFSI information of layer 2;
- Fig. 11:: Flow chart for selecting of the scale factors;
- Fig. 12:: Flow chart of the process "Sample-Reconstruction";
- Fig. 13:: Flow chart of preprocessing said "Sample-Reconstruction";
- Fig. 14:: Flow chart of re-grouping the data streams for preprocessing;
- Fig. 15:: Flow chart for reconstruction of the samples;
- Fig. 16:: Flow chart of process control for the matrix operation using the second control unit 3;
- Fig. 17:: Flow chart of processing addresses of the matrix coefficients stored in the ROM using the second control unit 3;
- Fig. 18:: Flow chart of the process control for windowing using the second control unit 3;
- Fig. 19:: Flow chart of processing a new address for data stored in the RAM for windowing;
- Fig. 20:: Flow chart of the address initialization for data stored in the RAM for windowing;
- Fig. 21:: Order of the memory accesses;
- Fig. 22:: Logical division of the memory.

### DETAILED DESCRIPTION OF PREFERRED EMBODIMENTS

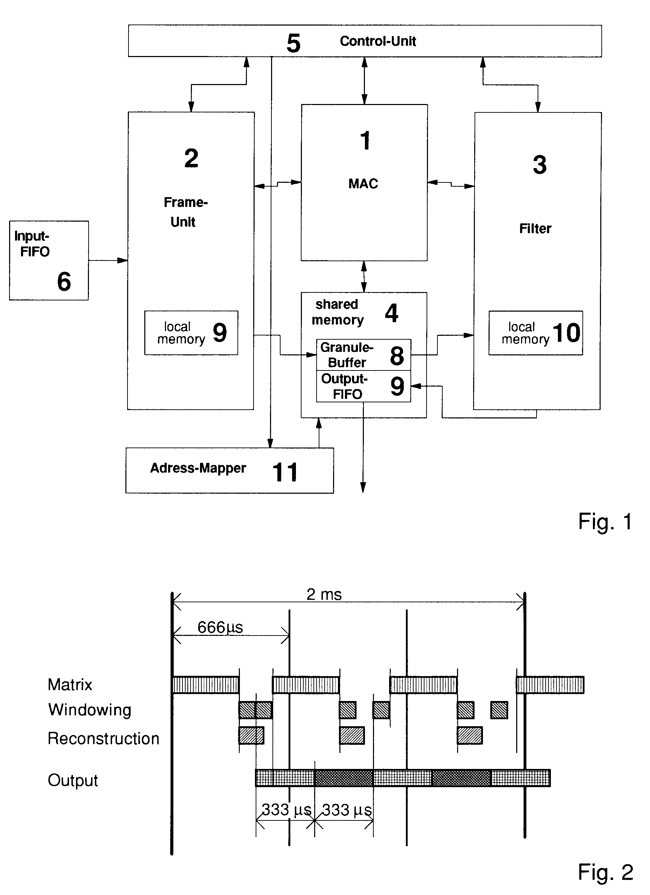

Essentially the hole unit shown in figure 1 is comprising of four blocks: first control unit ("Frame-Unpacker") 2, second control unit ("Filter bank") 3, processing unit 1 and system control unit 5 and two FIFO memorys 6 and 7 for handling input and output data. The data stream will be read using the input FIFO memory 6. In the first control unit ("Frame-Unpacker") 2 synchronisation, evaluation of the header and decoding of page informations is taken place. Also the first control unit 2 is responsible for the reconstruction of the quantizised and scaled samples. The reconstructed samples are transformed into the range of time, windowed and transfered to the output FIFO memory 7 afterwards using said second control unit ("Filter bank") 3. Saving chip area first and second control unit 2 and 3 ("Frame-Unpacker" and "Filter bank") are using common resources. The complete multiplications and additions are processed into said processing unit 1 comprising only one multiplier accumulator unit (MAC), the data transfer between first and second control unit 2 and 3 is taken place via a commonly used shared memory 4. Achieving a more efficient capacity-use of the common resources, they are processed having a time multiplex tightly interlocking into each other. Control of the processes is processed by a system control unit 5.

Said processing unit 1 comprises a multiplier accumulator unit having two inputs and one output. Using a control vector it can be determined, whether the results of a multiplication shall be summarized by the use of an accumulator. The result of the multiplication and the content of the accumulator respectively can be connected to said input.

Processing of the data is done granule oriented. A memory called "Granule-Buffer" 8 is able to store a complete granule.

Decoding of the data stream can be processed using five processes "Page info", "Sample rekonstruction", "Calculation of matrix", "Windowing" and "Output". Said processes are tightly interlocked into each other, succeeding in an utilization of the common resources as efficient as possible. Based upon the logical order of the processes depending on the data flow the processes are described. It is obvious, as shown in the table 3, that the processes are accessing corresponding common resources.

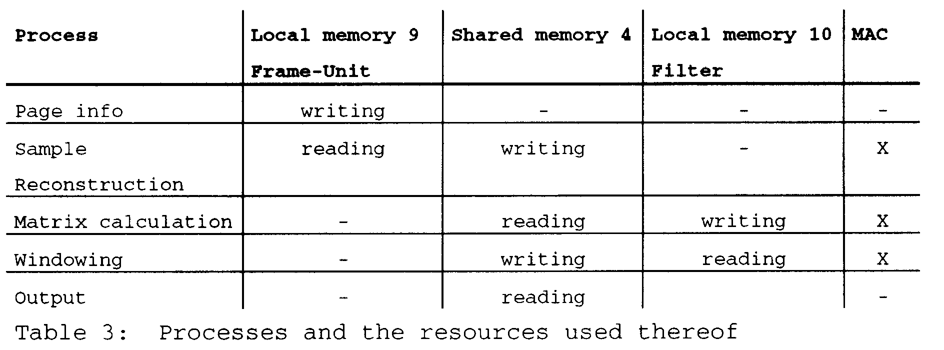

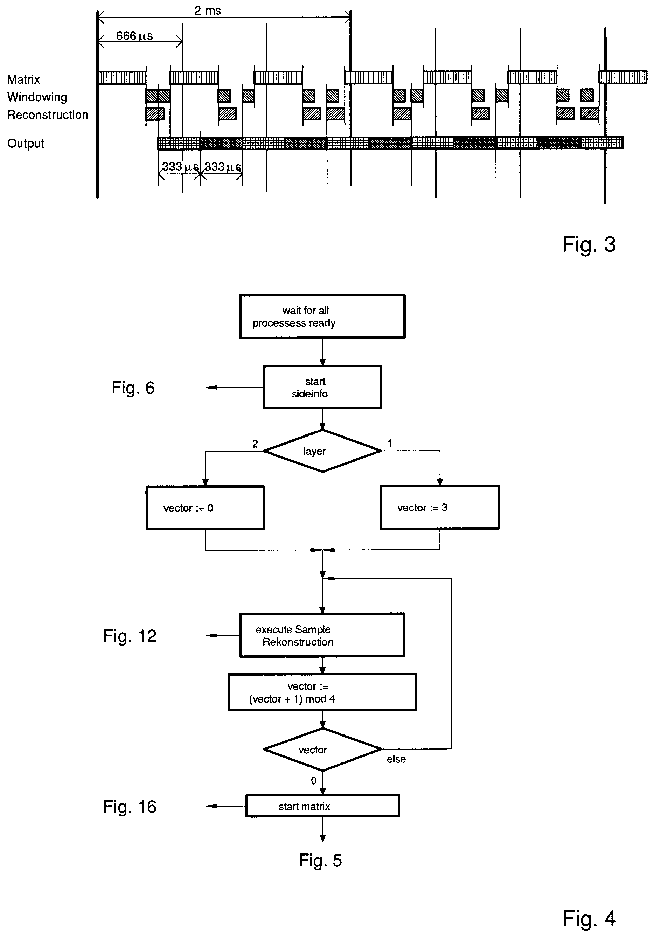

In the figures 2 and 3 the time interlocking of the processes for layer 1 and 2 is shown. Matrix operation is running without further parallel procedures. Reconstruction of the samples can be processed contemporaneous with the windowing process. Independently to the processes the output of the data is taking place, possibly controlled by an external signal. The process of matrix calculation is stopped in defined intervals and the output of the PCM coded audio data is processed in the desired rate without delay.

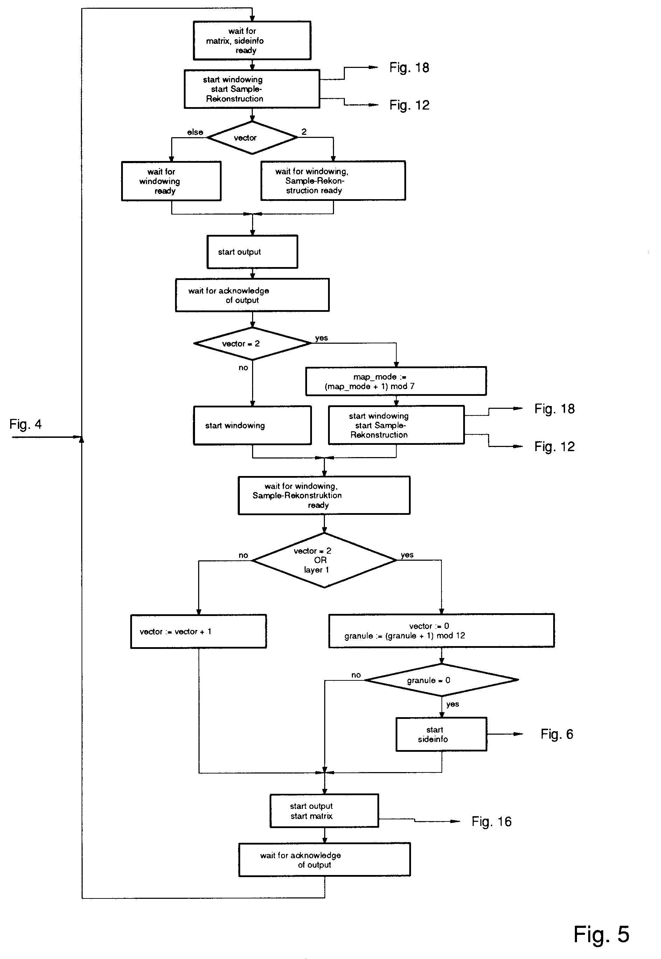

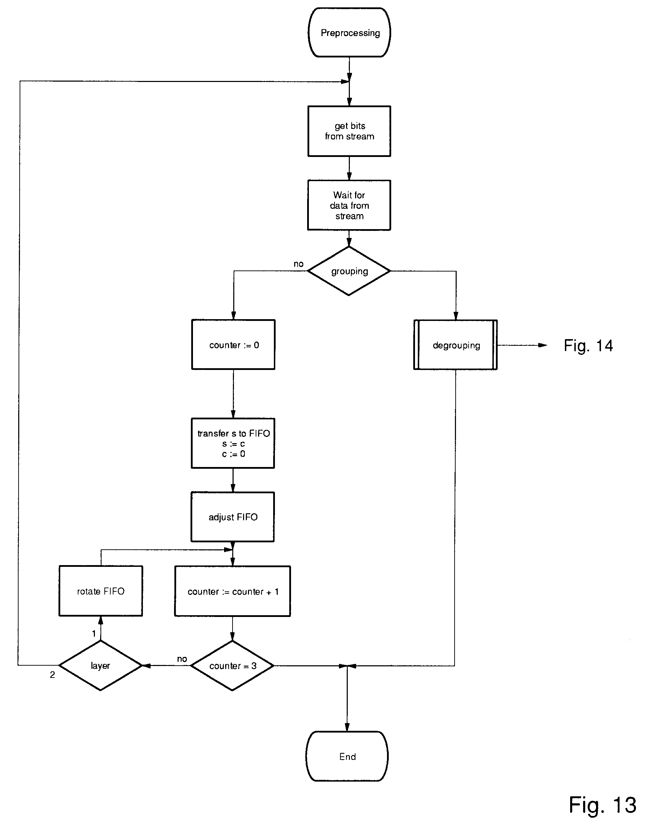

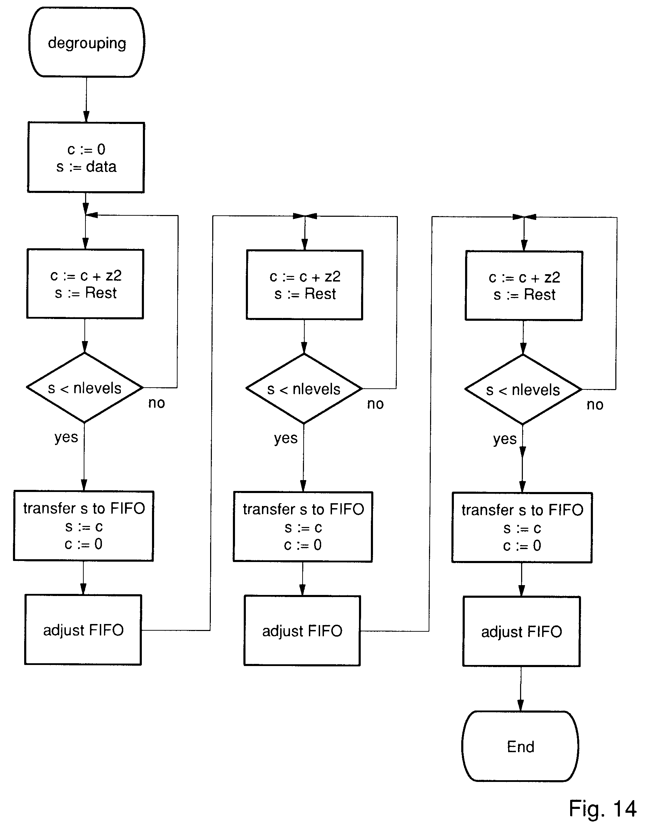

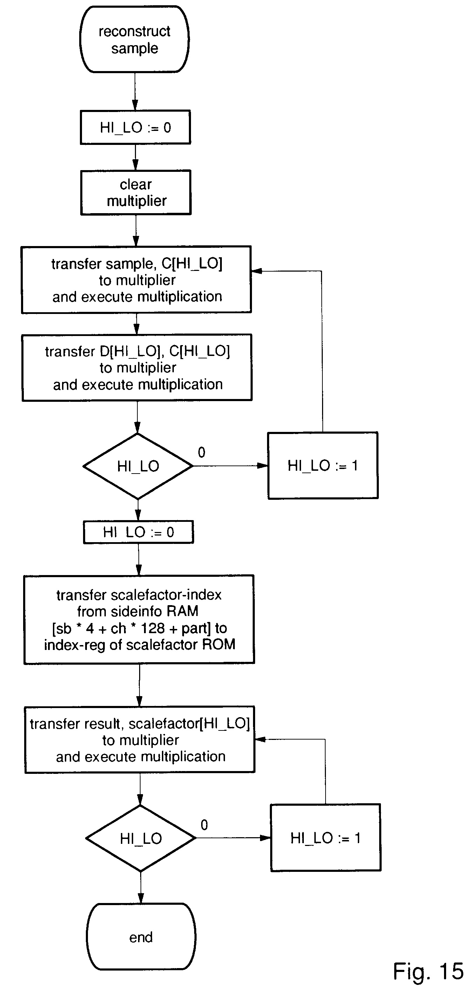

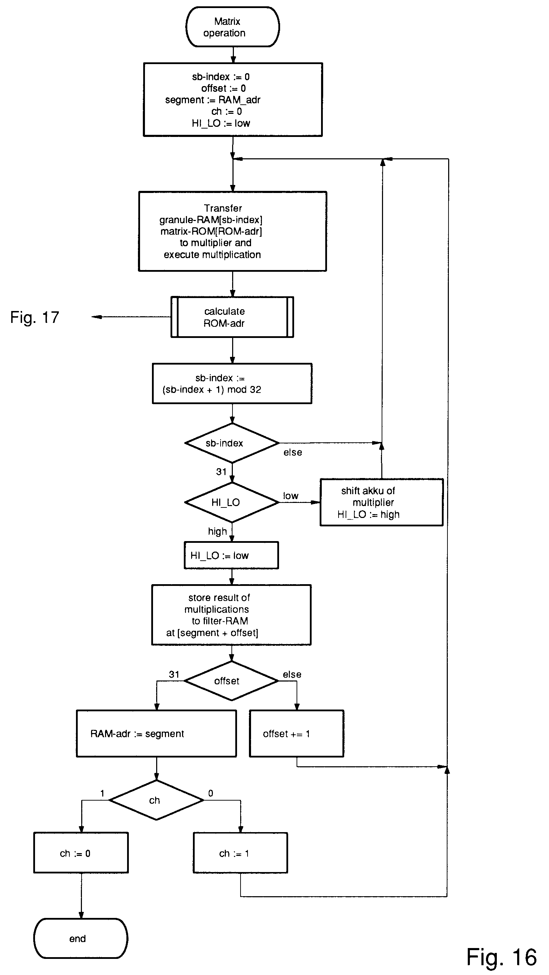

The order of the processes are described in the figures 4 to 20 using flow diagrams. They can be realized as hard-wired units using gate arrays or programmed units using common design tools. In the invention, the processes shown in the figures 4 to 15 are realized in said first control unit 2. A flow is shown in the figures 16 to 20 for matrix calculation and windowing therefore a hardware solution can be implemented into said second control unit 3.

### 1. Activation of the processes

Synchronisation of the processes is taken place cooperative via the individual processes, the order of the activations of the processes will be determined by the system control unit 5. Said system control unit 5 can be realized as a programmable unit or a hard wired logic circuit. A flow possibly for decoding is shown in the flow diagram in figure 4. An essential functional features of the system control unit 5 is the generation of start signals for starting the individual processes. The end of the processes will be signaled to the system control unit 5 by the first and second control units 2 and 3.

For activation of a process using a start signal the corresponding signal will be set to the value '1' for one clock cycle. Afterwards the active process is blocking the whole other processes accessing common ressources using a RDY signal equal '0'. If the active process ends at a location where the process can be interrupted or arrives at this location, thus the process is signalizing this state switching over the RDY signal at '1'. The system control unit 5 afterwards defines the process to be activated next. An exception hereof is the output process controlled by an external clock being continuously active.

### 2. The process "side info"

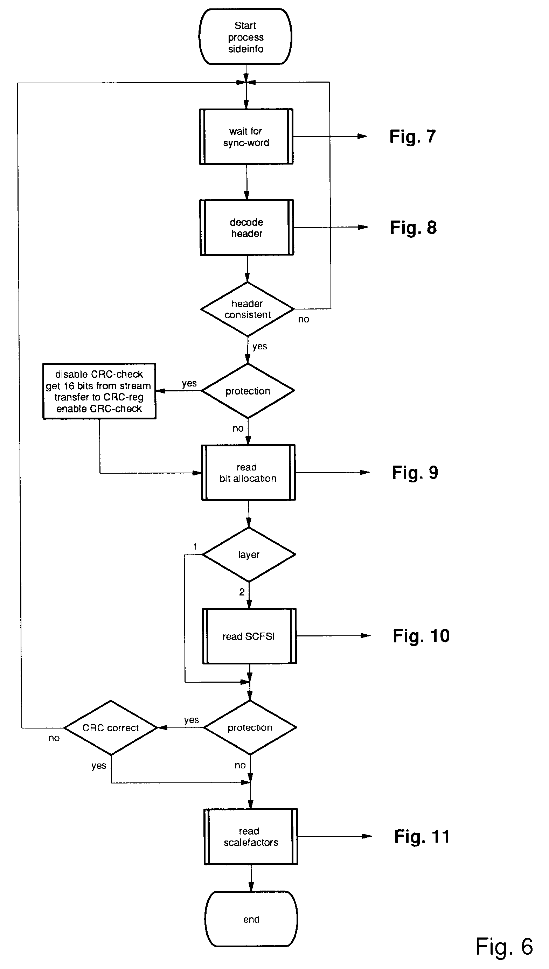

In the process "side info", shown in detailes in figure 6, synchronisation of the frame, decoding of the header and reading the page informations out of the data stream is carried out. Thereby a completely bit allocation table and an index table of the scale factor is built up and is stored into a local memory 9 of the modul "Frame Unpacking". This process will be started once at the beginning of each of the frame and is not accessing to common resources.

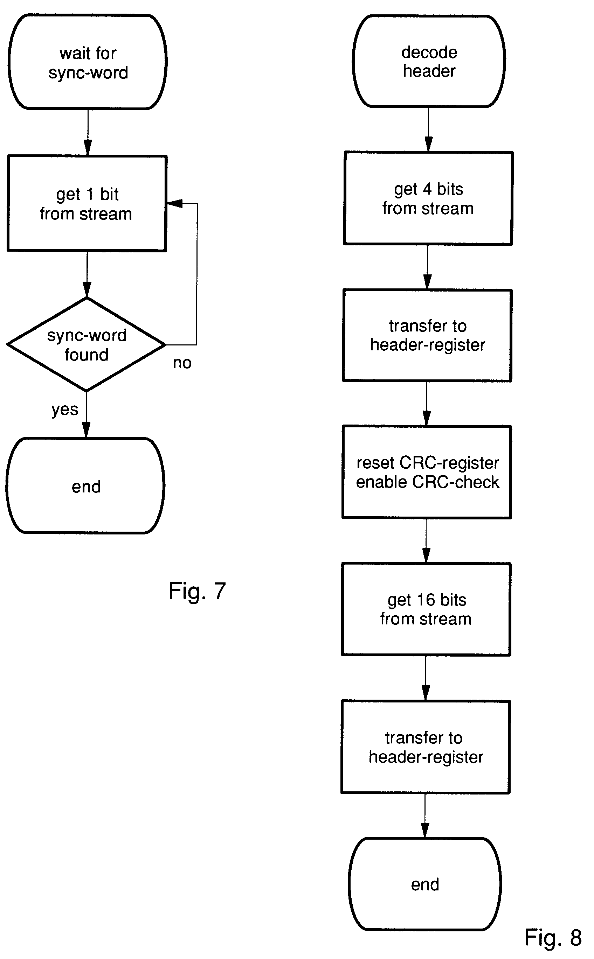

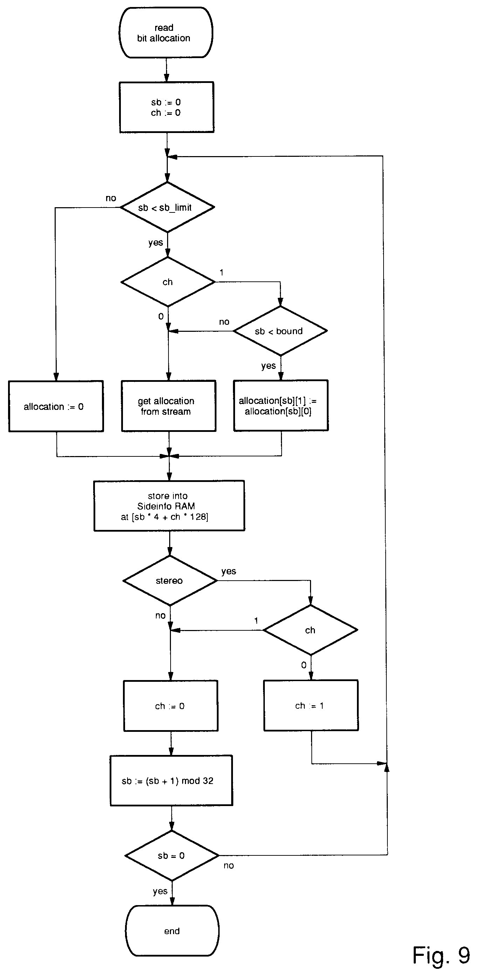

In the following the essential functional features of the process "page info" is described. First the synchronization data will be searched, such as described in figur 7, bitwise checking the data stream. Afterwards the header and the CRC data word will be read and the validity thereof is checked. This process is described in figure 8. Therefore 4 bits of the data stream are loaded into a register memory, reset of the CRC register is taken out and the CRC control is switched on. Then 16 bits are written into the header register. If the header is invalid the next synchronization data word is searched. The length of the following audio data will be checked in the process "bit allocation", as described in figure 9, and is written into said local memory 9 of the first control unit 2.

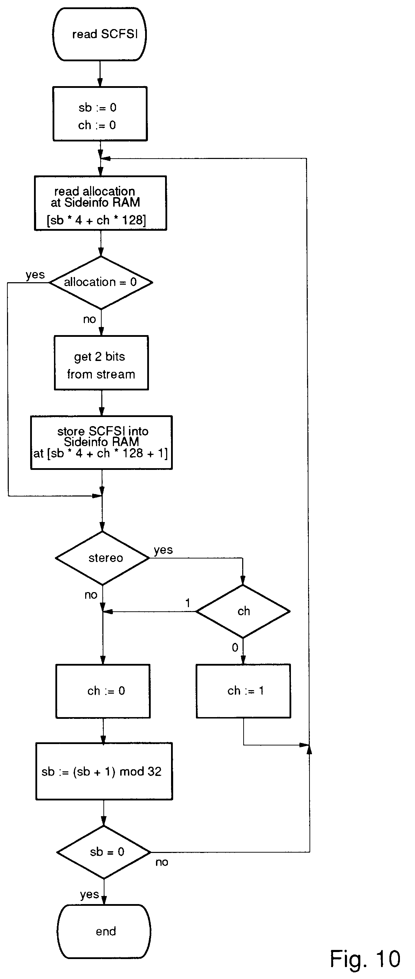

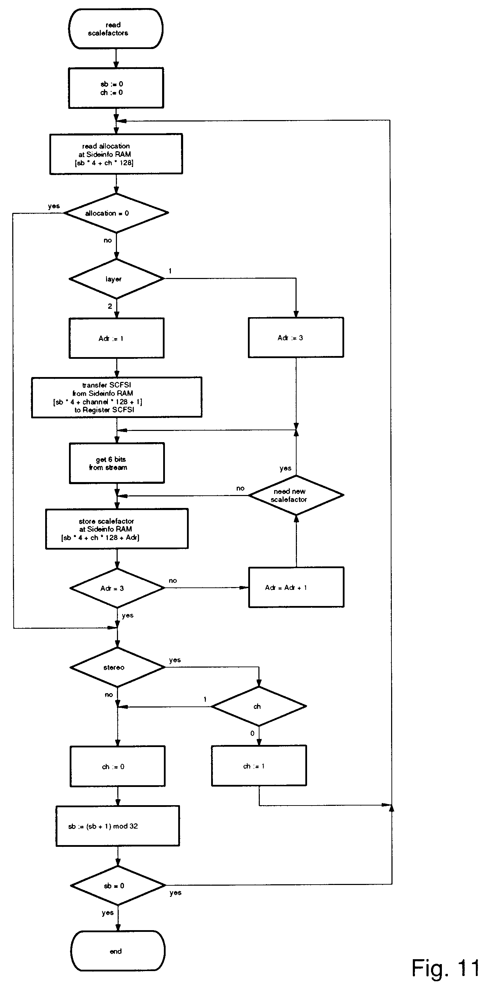

If the data stream is transmitted in layer 2 format the SCFSI-Information (selected information of the scale factor) is read and intermediately stored into the local memory 9 of the first control unit 2. The handling how to read the SCFI-Signal is described in figure 10. Afterwards the scale factors are read and stored into the local memory 9 of the first control unit 2. This process is described in figure 11.

### 3. The process "Sample Reconstruktion"

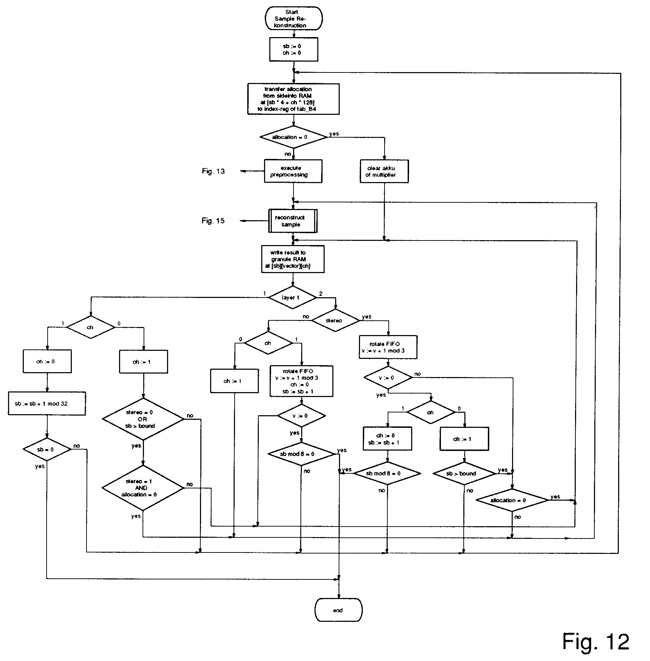

In the process "Sample Reconstruktion", described in figure 12 to 15, the samples of the bit stream are inverse quantizised and rescaled. For this, first the samples of the frequency area of a granule are read out of the data stream and inverse quantizised afterwards. For this, two multiplications are required, whose results are summarized using the accumulator. This provisional result will be send to the input and will be multiplied to the scale factor. Altogether three multiplications are necessary per sample. This calculation can be taken out in the time multiplex together with the windowing. For making possible each of the processes accessing to the commonly used processing unit 1 (MAC) the processes can be stopped at defined times and later started again. The process "sample reconstruktion" should be interrupted every 32 * N ( N = number of channels) having the layer 1 and every 24 * N (N = number of channels) having the layer 2, to prevent overwriting data in said granule buffer 8 still being required by the process "matrix calculation".

Essential functional elements of this process are preprocessing together with degrouping and control of the multiplier unit for processing the actual reconstruction. In the preprocessing process the data are read out of the stream and are directly written into the FIFO output memory 9. If the data are grouped a degrouping will be processed. For this the data are written block wise into the FIFO output memory 9 using three stages at a maximum. Reconstruction is taken place in such a manner, that there is a reset of the processing unit 1. After that a coded sampled data are multiplied to the coefficients of inverse quantization. The result of the inverse quantization will be multiplied to the scale factor afterwards. Then the reconstructed data are written into the granule buffer 8 of the common shared memory 4.

### 4. The process "matrix calculation"

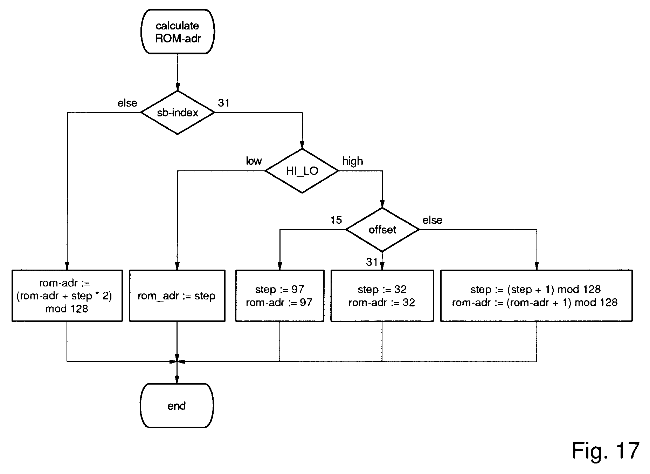

In the process "matrix calculation", described in figur 16, the transformation of the data in the range of frequency into data in the range of time is taken place using a matrix operation. For this the data of a 32-data-width vector, which corresponds to the number of part bands, is read out of the Granule-Buffer 8 in turns, filtered and written into the local memory 10 of the filter bank. In this case, the coefficients for the matrix calculation are stored in a ROM. These procedure has the advantage, that the memory efford will be reduced. The following data are read using calculating of addresses. For this, the procedure calculation of ROM-adresses, shown in figure 17, is serving. For both channels the process requires 32 * 32 * 2 multiplications. The process "matrix calculation" will not be interrupted, so that in this time the processes "Windowing" and "Sample Rekonstruktion" are blocked.

### 5. The process "Windowing"

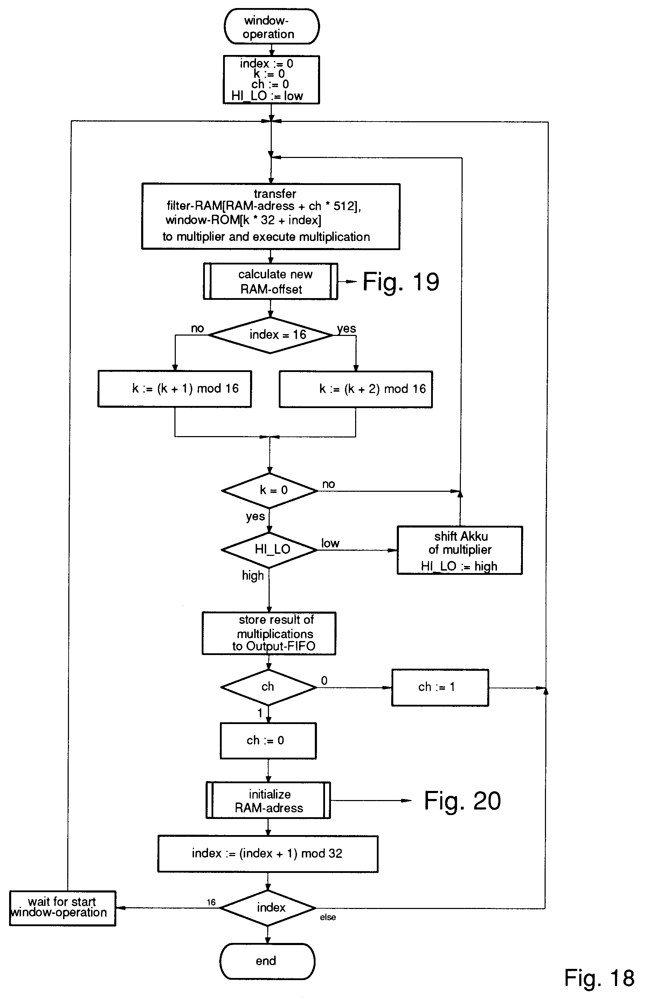

In this process the data in the area of time are windowed using the local memory 10 of the filter bank to receive the PCM audio data to be given out. The decoded audio data are written into the output FIFO memory 9 and given out using the process "Output". This procedure is shown in figure 18.

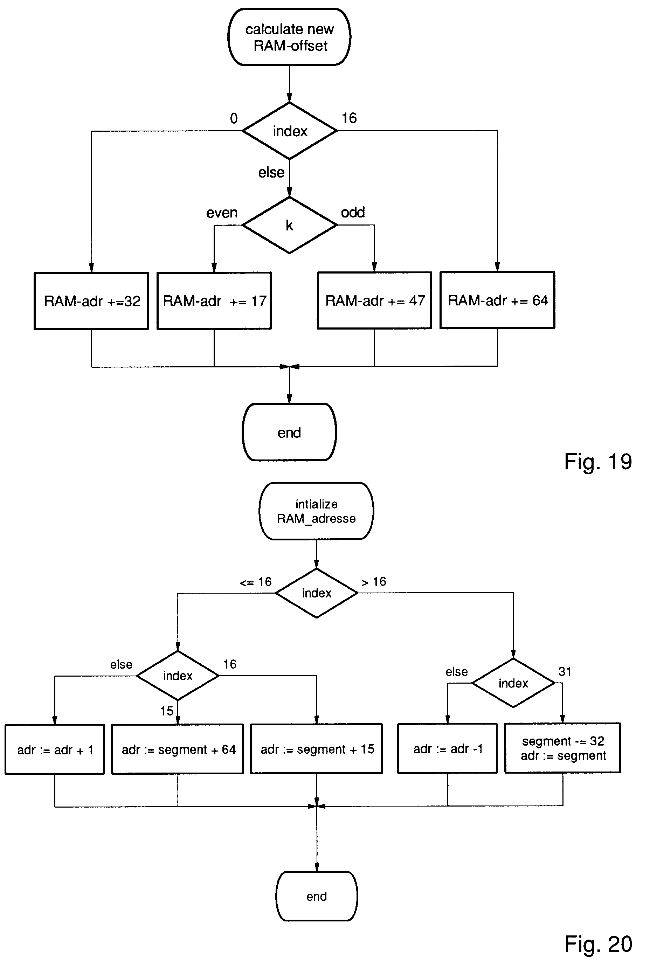

The data arising in the area of time are read out of the local memory 10 of the filter bank and together with the respective coefficients of a local ROM memory they are written into the processing unit 1. In said processing unit 1 the multiplication and accumulation will be processed. Because the coefficients for windowing are showing symmetrical characteristics only half of the data given in the standard are stored. The access to the RAM addresses of the local memory 10 is controlled by the procedure "Calculate new RAM offset". This process is described in figure 19. After each 16 PCM data of the lower and upper storage area are processed, the result will be written into the output FIFO memory 9. Afterwards the procedure is stopped. By doing so it will be guaranteed, that the process "Output" is able accessing to the output FIFO memory 9 sufficient times, thus no data are overwritten not being written out already. The actual memory address of the input data in the second local memory 10 are calculated using the procedure "Initialize RAM-adress", described in figure 20.

### 6. The process "Output"

The process "Output" is used for the output of the PCM audio data (e.g. to a DAC, hard disk, et cetera) from the output FIFO memory 9. The output clock rate will be defined by an external clock signal (e.g. sample rate or bus clock).

### 7. The addressing of the shared memory 4

The addressing of the common shared memory 4 is not taken place directly by the processes accessing to the memories, but by using an address mapping device 11. That way an optimized utilization of the granule buffer 8 can be achieved, while memory cells getting free can be overwritten immediately. The control of said adress mapping device 11 is taken place by a map mode being set by said system control unit 5. The map mode is defining, in which place of the shared memory 4 the samples are stored. Through the postponement in time of the processes accessing to the shared memory 4 it results, that each process is changing the map mode in another moment.

Based upon the different processing sequences of reconstruction and filtering the following problem arises:
After a matrix operation and filtering 32 memory cells are getting free. These cells can't be used having a linear addressing of the memory for storing the following granule. This is, because the reconstruction is taking place in groups of three. Said problem is described in figure 20. In the left-hand block the order of the reconstructed samples in the range of frequency are shown. In the reconstruction at first the 0th, 32th and 64th data are accessed and afterwards the 1th, 33th and 65th data et cetera are accessed. Hereby said data are divided in groups of three. In the matrix operation, however, the groups are processed one after another, as shown in the right block of figure 20.

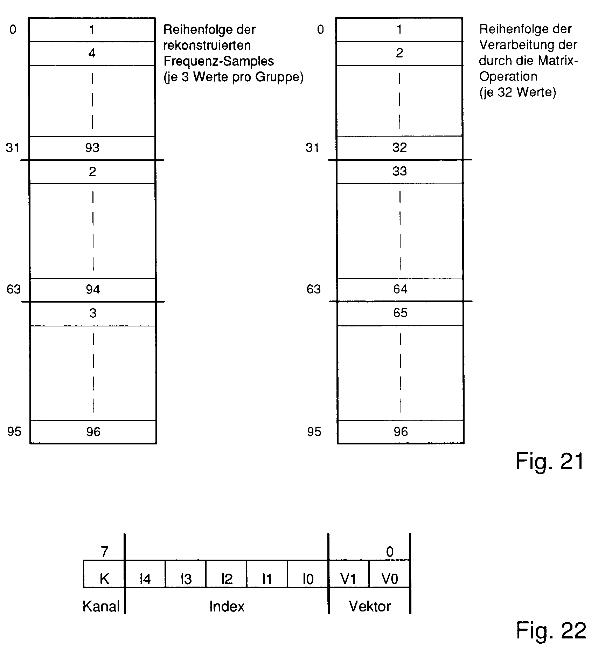

For this, one aspect of the invention is transforming the linear logical address area of the individual processes to a physical address of the shared memory 4 with the help of a function of transformation. On the other hand said instruction for transformation is not static, but depends on the state of the decoder dynamically. Thereby the logical division of the memory is choosen such a way, that the 8 bit width address is divided in three areas, as shown in figure 21.

The bit 7 is dividing a 256 data sized memory in one area per channel.

The bits 1 and 0 are dividing each of the two areas into four groups, whereas the following assignment is valid:

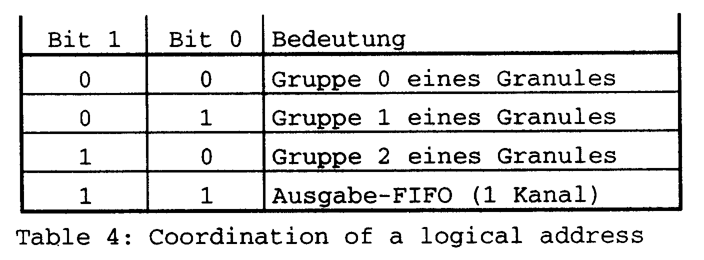

Within each of these four groups the bits having an index 6 to 2 are indicating the offset within a group (the subband). Recalculation of the address of the logical address area into an address of the physical existing memory 4 is taking place within said address mapper 11 using the following function of transformation:
Adr_phy = Adr_log[7], (Adr_log[6..0] rotate left (J*2)) with:
J = 0 .. 6;
Adr_phy = physical address;
Adr_log = logical address.

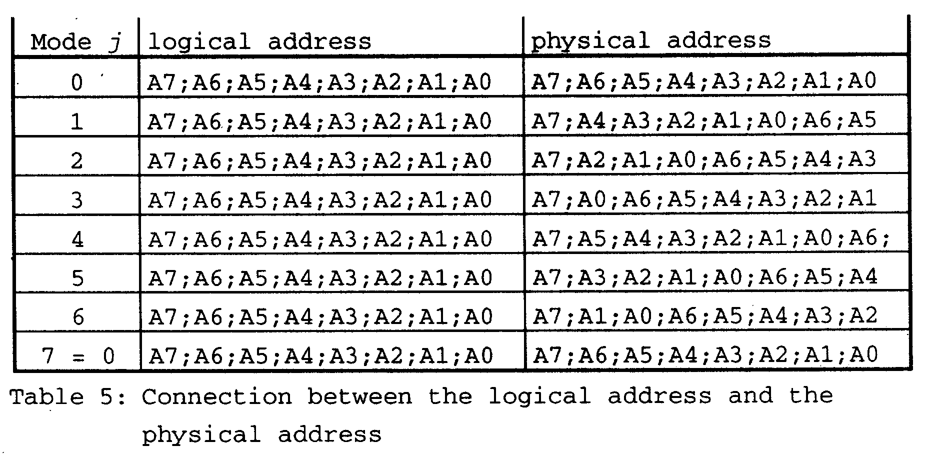

In the table 5 the connection between the logical address and the physical address is clearly shown. After sequential passing the seven states, the original condition will be reached. The parameter J of the function of transformation is representing said adressing modus being set by the system control unit 5 depending on the state of the decoder. The adressing mode will be set to value 0 while initializing the decoder and will be incremented after processing of a granule. For this a modulo-seven counter is used. Because the various processes finishing processing of a granule at different times, the modus of addressing of the processes temporary distinguish about one. Using said process control it can be guaranteed, that never two processes are writing the same memory cells.

This kind of addressing the memory cells are already available for said reconstruction even before finishing the filtering operation of a granule. Thus a parallel running of the processes is possible, without passing the minimal efford of memory.

Said function of transformation can be implemented easily by a group of 7x1 multiplexer as a hardware. Said method of addr,essing results in, that 24 of the 32 memory cells getting free by the first of said three matrix operations of a granule are used again by the reconstruction. Also after the second matrix operation 24 memory cells are available for the reconstruction. After the third matrix operation, i.e. after termination of the matrix operations of a granule in the layer 2, the remaining 48 memory data are vacant for the reconstruction.

## Claims

1. Method for decoding of digital audio data coded in layer 1 or 2 of MPEG format, comprising the processes:
- Synchronisation of frames of a stream of said audio data comprising a synchronization data word, a header, a page information, quantizised subband samples and optional additionally informations;
- Decoding of said header;
- Reading of said page informations;
- Inverse quantization of said quantizised subband samples;
- Rescaling of said inverse quantizised samples;
- Transformation of said rescaled sample data from the range of frequency into the range of time using a matrix operation;
- Windowing of the data transformed into the range of time;
**characterized in**,
that processing of the inverse quantization of said quantizised samples and processing of the rescaling of said inverse quantizised samples is taking place contemporaneous to the windowing of the data transformed into the range of time and not contemporaneous thereto said transformation of the data from the range of frequency into the range of time using a matrix operation is taking place.

2. Method according to claim 1, **characterized in**,
a) processing said synchronization of frames of a stream of said audio data, decoding of said header, reading of the page informations, inverse quantization of said quantizised subband samples and rescaling of said inverse quantizised samples using a first control unit (2) and
b) processing said transformation of said rescaled sample data from the range of frequency into the range of time using a matrix operation and windowing of the data transformed into the range of time is processed using a second control unit (3).

3. Method as claimed in claim 1, **characterized in**, that the process of the rescaling and inverse quantization of 32 * N samples in layer 1 or 24 * N samples in layer 2 is continuously processed, with N being the number of channels.

4. Method as claimed in claim 1, **characterized in** using a function of transformation of a linear address room of a first process into a physical address being proportional to a linear, logical adress room of a second process depending on a data group to be processed.

5. Method as claimed in claim 4 **characterized in**, that said function of transformation is such, that a part of the address bits are leaved at equal positions without changes and the position of the other part of address bits rotates about a number of positions being proportional to a value characterizing the respective data group being processed.

6. Apparatus for decoding of digital audio data coded in layer 1 or 2 of MPEG format, comprising the processes:
- Synchronisation of frames of a stream of said audio data comprising a synchronization data word, a header, a page information, quantizised subband samples and optional additionally informations;
- Decoding of said header;
- Reading of said page informations;
- Inverse quantization of said quantizised subband samples;
- Rescaling of said inverse quantizised samples;
- Transformation of said rescaled sample data from the range of frequency into the range of time using a matrix operation;
- Windowing of the data transformed into the range of time;
said apparatus comprising:
- an input unit (6) and an output unit (9);
- a processing unit (1) comprising one multiplier and an accumulator;
- a first control unit (2) and a second control unit (3) independently running from each other;
- a shared memory (4), whereas the first control unit (2) and the second control unit (3) having an access to said processing unit (1) and to said shared memory (4);
- a system control unit (5) for controlling the time sequence of the processes;
**characterized in**,
a) that said first control unit (2) is a fixed wired circuit for synchronization of frames of a stream of said audio data, for decoding of said header, for reading of the page informations, for inverse quantization of said quantizised subband samples and for rescaling of said inverse quantizised samples;
b) that said second control unit (3) is a fixed wired circuit for transformation of said rescaled sample data from the range of frequency into the range of time using a matrix operation and for windowing of the data transformed into the range of time;
c) that said first and said second control unit (2) and (3) comprising local memory (9) and (10) respectively;
d) that processing of the inverse quantization of said quantizised samples and processing of the rescaling of said inverse quantizised samples is taking place contemporaneous to the windowing of the data transformed into the range of time and not contemporaneous thereto said transformation of the data from the range of frequency into the range of time using a matrix operation is taking place.

7. Apparatus as claimed in claim 6, **characterized in**, that said system control unit (5) is designed for starting said first and second control units (2) and (3) using start signals.

8. Apparatus as claimed in claim 6, **characterized in** a memory (9) for buffering and for an output of the decoded audio information, the output being controlled by an external clock signal.

9. Apparatus as claimed in claim 6, **characterized in** a multiplexer for processing the addresses using a function of transformation of a linear address room of a first process into a physical address being proportional to a linear, logical adress room of a second process depending on the respective data group to be processed.
